# EUROPEAN PATENT APPLICATION

(11) **EP 4 664 333 A1**
(43) Date of publication of application: **17.12.2025**
(21) Application number: 25181499.2
(22) Date of filing: 06.06.2025
(51) Int. Cl.: G06F 21/56, G06N 3/08

(54) **REPRESENTATION-AGNOSTIC FILE CLASSIFIER**

(30) Priority: 13.06.2024 US 202463659814 P; 27.09.2024 US 202418900283
(71) Applicant: CrowdStrike Inc., Sunnyvale, CA 94086 (US)
(72) Inventor: STORTZ, Florian, London (GB); SCHWYZER, Felix, Berlin (DE); RADU, Marian, Bucharest (RO)
(74) Representative: Murgitroyd & Company

(57) **Abstract**

A method of monitoring an endpoint for malicious code includes deploying an artificial intelligence (AI) model to a endpoint protection system, the AI model trained on a plurality of executable code files in byte form, monitoring a target system for execution of a target executable file. The method further includes analyzing, by the AI model, the target executable file in the byte form of the target executable file and determining, based on an output of the AI model, a decision variable for the target executable file.

## Description

### RELATED APPLICATIONS

This application claims benefit of provisional U.S. Patent Application No. 63/659,814 filed on June 13, 2024, which is herein incorporated by reference in its entirety.

### TECHNICAL FIELD

Aspects of the present disclosure relate to detecting malware infections in binary files, and more particularly, to transformer-based representation-agnostic file classification.

### BACKGROUND

Binary files are files that have been compiled and are ready for execution by a processor. Binary files are a popular format for malware infections where malware is injected into the binary code such that the malware is executed when the infected file is executed. Detecting malware infected binary files can be done using rule-based systems or models applied on the entire files. Other types of malware may include worms, trojans, ransomware, spyware, adware, fileless malware, etc.

Artificial intelligence (AI) is a field of computer science that encompasses the development of systems capable of performing tasks that typically require human intelligence. Machine learning is a branch of artificial intelligence focused on developing algorithms and models that allow computers to learn from data and make predictions or decisions without being explicitly programmed. Machine learning models are the foundational building blocks of machine learning, representing the mathematical and computational frameworks used to extract patterns and insights from data. Large language models, a specialized category within machine learning models, are trained on vast amounts of text data to capture the nuances of language and context. By combining advanced machine learning techniques with enormous datasets, large language models harness data-driven approaches to achieve highly sophisticated language understanding and generation capabilities. As discussed herein, artificial intelligence models, or AI models, include machine learning models, large language models, and other types of models that are based on neural networks, genetic algorithms, expert systems, Bayesian networks, reinforcement learning, decision trees, or combination thereof.

### SUMMARY

Accordingly there is provided a method as detailed in claim 1. Advantageous features are in the dependent claims. Also provided is a system and a computer program as detailed in the claims.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram illustrating an example system architecture, in accordance with some embodiments of the present disclosure.
FIG. 2A is a block diagram that illustrates an example system for training a byte-based classification model, in accordance with some embodiments of the present disclosure.
FIG. 2B is a block diagram illustrating an example system for preprocessing executable files for a byte-based classification model, in accordance with some embodiments of the present disclosure.
FIG. 3A is a block diagram illustrating an example system for file classification using a cloud deployed byte-based classifier, in accordance with embodiments of the present disclosure.
FIG. 3B is a block diagram illustrating an example system for file classification using a byte-based classifier deployed locally to a network sensor, in accordance with some embodiments of the present disclosure.
FIG. 3C is a block diagram illustrating an example system for file classification using a byte-based classifier deployed to a local sensor and a cloud cybersecurity platform, in accordance with some embodiments of the present disclosure.
FIG. 4 is a block diagram illustrating an example computing system for file classification using a byte-based classifier, in accordance with some embodiments of the present disclosure.
FIG. 5 is a flow diagram of an example method of file classification using a byte-based classifier, in accordance with some embodiments of the present disclosure.
FIG. 6 is a block diagram of an example computing device that may perform one or more of the operations described herein, in accordance with some embodiments of the present disclosure.

### DETAILED DESCRIPTION

As discussed above, binary files (e.g., executable files) are a popular format for malware infections and thus represent a large portion of the data that cybersecurity platforms process. For example, a cybersecurity platform may collect large amounts of data in the form of byte buffers, such as shell code, dynamic link libraries (DLLs), portable executables (PEs), Mach-Os (e.g., executable files for an iOS or macOS operating system), and so forth. Conventional cybersecurity platforms analyze and classify this type of data using rule-based systems, tree-based AI models, or in some cases, neural networks. Tree-based AI models rely on handcrafted features of files which do not capture a file in its entirety and impose a particular limiting modality or encoding on the data, which represents certain assumptions about the data and thus limits adaptability of the model. Accordingly, these limitations may lead to suboptimal prediction performance.

Various file formats are used to encode executable files for different operating systems. For example, the Mach-O file format encodes executable files for macOS operating system. Some file formats, such as Mach-O, consist of multiple sections, such as a header section, a section of load commands specifying the layout and linkage characteristics of the file, and a data section which contains binary code. The binary code section may be hierarchically organized in segments, which in turn may be organized in sections. In some file formats, for security reasons, each segment has a read-write-execute protection flag, which can restrict the operations which the CPU can do on the corresponding segment. Such file format structures may be used strategically to increase prediction performance and efficiency.

The present disclosure addresses the above-noted and other deficiencies by providing an AI model which operates on file bytes directly to identify malicious code. Embodiments may use a byte-based AI model to automate feature extraction from binary files and provide for model-driven exploration of the representation space rather than performing these steps manually. Embodiments may provide comparable classification performance to conventional classification algorithms without manual feature engineering.

In some embodiments, an AI model is trained on a large dataset of executable file (e.g., in a particular file format) samples, including benign, malicious, obfuscated, and non-obfuscated examples. The AI model may be configured for continuous learning and updates using newly collected data. For example, the model may be re-trained periodically on fresh data to adapt to evolving obfuscation and malware techniques. In some examples, the model may allow for human feedback to update the model and provide more accurate results. In some embodiments, the model may read the executable code directly in byte form without imposing modality or encoding the file samples. In some embodiments, a preprocessor may filter out all non-executable sections of a file in order to achieve greater visibility of relevant sections (e.g., only allowing executable sections through to be analyzed).

In some embodiments, a trained version of the byte-based AI model may be deployed in the cloud, such as at a cloud-based cybersecurity platform. In some examples, the model may be compressed and distilled to reduce the model footprint for deployment to an endpoint sensor (e.g., sensor deployed to, or in proximity to, an endpoint device). Upon detection of the execution of a file in the file format applicable to the model, a sensor may send the contents of the file to the model in the cloud, to the local model at the sensor, or to both. The model, whether it be the cloud model or local model, may then analyze the file (retaining the file along with the file metadata for future training) and output a decision variable containing predicted probabilities for each possible label (e.g., classification, such as malicious, safe, risky, etc.) for the file. In some examples, the model also generates and outputs an embedding of file. The embedding may include a vector of several data points associated with the file. In some examples, the decision variable, the embedding, or both the decision variable and embedding may be provided as inputs to other classification models (e.g., tree-based models, rule-based models, etc.) for further classification determinations. Based on the combined outputs of each model, the cybersecurity system may determine if the process attempting to execute the file is to be halted (e.g., if the file is identified as compromised).

As discussed herein, the present disclosure provides an approach that improves the operation of a computer system by increasing the accuracy and precision of file classification for identification and prevention of malware infections and other cybersecurity threats. Embodiments discussed herein additionally provides improvements in the field of cybersecurity by reducing requirements of manual feature engineering and encoding of files and is adaptable to new and evolving obfuscation and malware techniques.

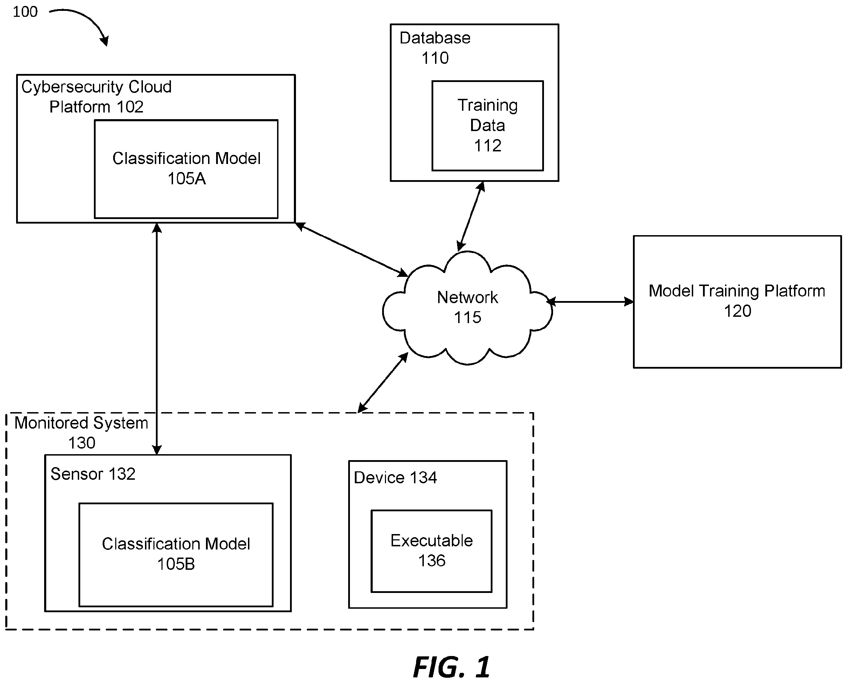

FIG. 1 is a block diagram illustrating a computing system architecture 100 in which embodiments of the present invention may operate. Computing system architecture 100 may include a cybersecurity cloud platform 102, a database 110, a monitored system 130, and a model training platform 120 coupled via a network 115. Network 115 may be a public network (e.g., the internet), a private network (e.g., a local area network (LAN) or wide area network (WAN)), or a combination thereof. In one embodiment, network 108 may include a wired or a wireless infrastructure, which may be provided by one or more wireless communications systems, such as a WiFi^{™} hotspot connected with the network 115 and/or a wireless carrier system that can be implemented using various data processing equipment, communication towers (e.g., cell towers), etc.

The monitored system 130 may be one or more physical or virtual devices, a cluster of devices, or any other computing system that may be monitored for cybersecurity. For example, the monitored system 130 may be a virtual machine, container, server, a mainframe, a workstation, a personal computer (PC), a mobile phone, a palm-sized computing device, or any other virtual or hardware computing device. The monitored system 130 may include a sensor 132 and a device 143 monitored by the sensor 132. In some examples, the sensor 132 may collect telemetry data of the device 134 and perform cybersecurity functions on the device 134 to prevent cyber attacks on the device 134. The sensor 132 may be hardware, software, or a combination thereof for monitoring the device 143 of monitored system 130. For example, the sensor 132 may be software deployed within an operating system of the device 143 (e.g., to operate as an agent) to collect telemetry data associated with the device 132.

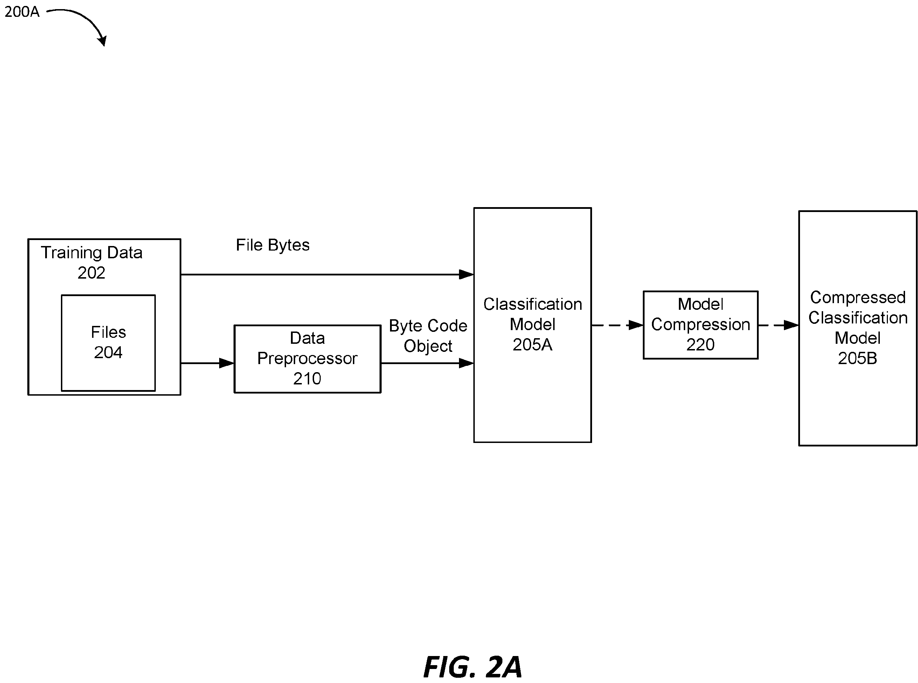

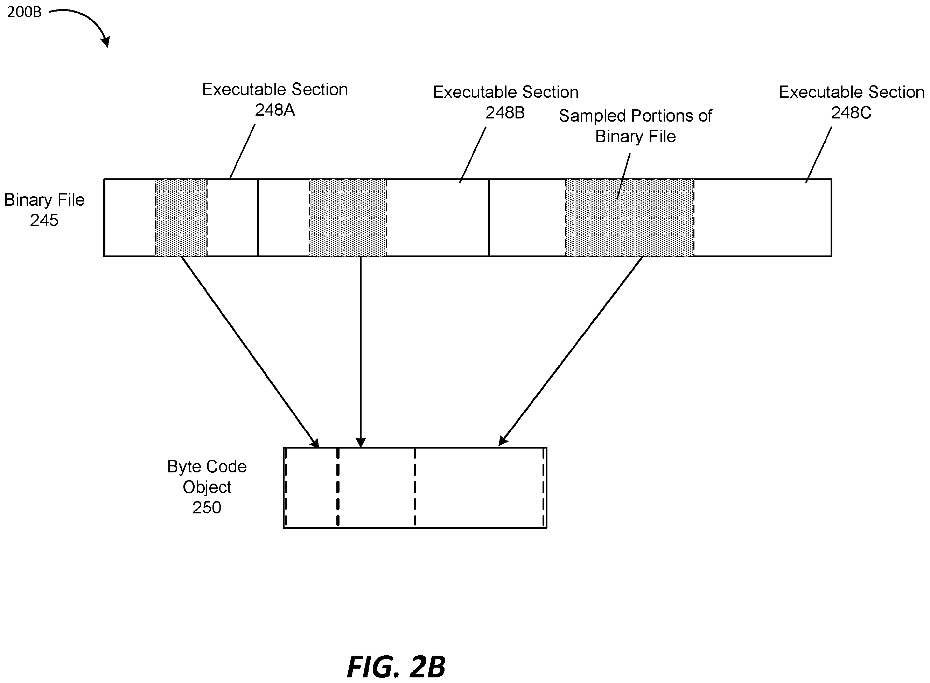

In some examples, the cybersecurity cloud platform 102, the sensor 132, or both the cybersecurity cloud platform 102 and the sensor 132 may execute a classification model (e.g., classification model 105A and 105B, which may be an AI model for classification) for determining whether an executable file (e.g., executable 136) invoked by a process of device 134 should be allowed to be executed or if execution of the executable should be prevented. The sensor 132, for example, may identify executable files prior to execution of the files and apply the classification model 105B, send the files to the cybersecurity cloud platform to apply the classification model 105A, or both. For example, classification model 105A-B may be a byte-based model trained via model training platform 120 using file bytes as training data (e.g., training data 112 of databased 110), as described in more detail with respect to Figures 2A and 2B.

FIG. 2A is a block diagram that illustrates an example system 200A for training a byte-based classification model (e.g., AI model), according to some embodiments. In some embodiments, a classification model 205A is trained via training data 202 including binary files 204. Binary files 204 may include executable files in a binary executable format. In some examples, the raw file bytes of the binary files 204 may be provided as a first input to the classification model 205A. In some examples, the file bytes may also be processed by a data preprocessor 210 which may filter out irrelevant sections of the files (e.g., leaving the executable portions that include certain permissions) and randomly sample the remaining portions of the files. The data preprocessor 210 may output one or more byte code objects that include a fixed size of bytes from each binary file, as described with respect to Figure 2B.

In some embodiments, the classification model 205A may be trained over several training epochs. A training epoch may include a complete iteration over the files 204 of the training data 202. At each epoch, different portions of the binary files may be sampled to generate the byte code objects for each of the files 204. Thus, over several epochs, most or all of the bytes of each file may be sampled and included in a byte code object for training the classification model 205A. In some embodiments, a randomization algorithm may be applied to the sampling of the binary files to provide for coverage of all bytes of each file (e.g., to mathematically ensure that each portion of the binary files and thus all bytes) are utilized in samples for training the classification model 205, thus providing the best possible view of the training data 202.

Once training of the classification model 205A is complete, the model may be provided for model compression 220 where one or more compression techniques are applied to the classification model 205A to reduce a footprint of the classification model 205A for deployment locally at a sensor (e.g., sensor 132 of FIG. 1). For example, the compression techniques applied to the classification model 205A by model compression 220 may include skip connection in the layers of the classification model 205A, pruning, quantization, knowledge distillation, low-rank factorization, or any other model compression techniques. Accordingly, after model compression 220 is complete, a compressed classification model 205B may be generated for deployment to the sensor or a cybersecurity platform. In some examples, the classification model 205A is a transformer based model. In some examples, the classification model 205A includes a transformer aspect, a convolutional aspect, and a tokenizing aspect that inspects the bytes of the binary files.

FIG. 2B illustrates an example of file byte sampling 200B of a binary file according to some embodiments. In some examples, a binary file 245 that is to be used as training data for a byte-based AI model includes several sections of executable code. During each training epoch, each section of the executable code of the file may be sampled in proportion to the size of the section with respect to the total size of the binary file 245 to provide for a fixed size training input from every file. Processing logic (e.g., data preprocessor 210 of FIG. 2A) may then combine the sampled code portions of the binary file 245 together into a byte code object 250. Every byte code object 250 may be of the same fixed size due to the proportional sampling from each section discussed above. As can be seen in FIG. 2B, the binary file 245 includes three execution sections 248A-C, each of which include a different number of bytes. Accordingly, the processing logic may determine a proportional size of each of the executable sections 248A-C. For example, the processing logic may calculate the proportional size of section 248C by dividing the size of section 248C by the total size of the binary file 245, or at least the remaining executable portions of the binary file 245 after filtering out the non-executable portions. The proportion of section 248C may then be multiplied by the fixed size of the byte code object 250 to determine the size of the sampled portion of section 248C. This process may be performed for each executable section (e.g., sections 248A-C).

Accordingly, the classification model (e.g., AI model) may be trained using the binary code objects 250 which are of consistent fixed size (e.g., 100kb-1MB) that is less than the overall size of the binary files, reducing computational requirements of processing entire files. In some embodiments, the sampling of the sections of the binary file 245 at each epoch may be systematically changed to ensure full coverage of the binary file 245 for training. Alternatively, the sampling may be completely random and the number of epochs made large enough to provide significant or full coverage of the bytes of the binary file 245 stochastically. Although only three executable sections are depicted in FIG. 2B for ease of illustration, any number of executable sections and any reasonable size of binary code object may be used.

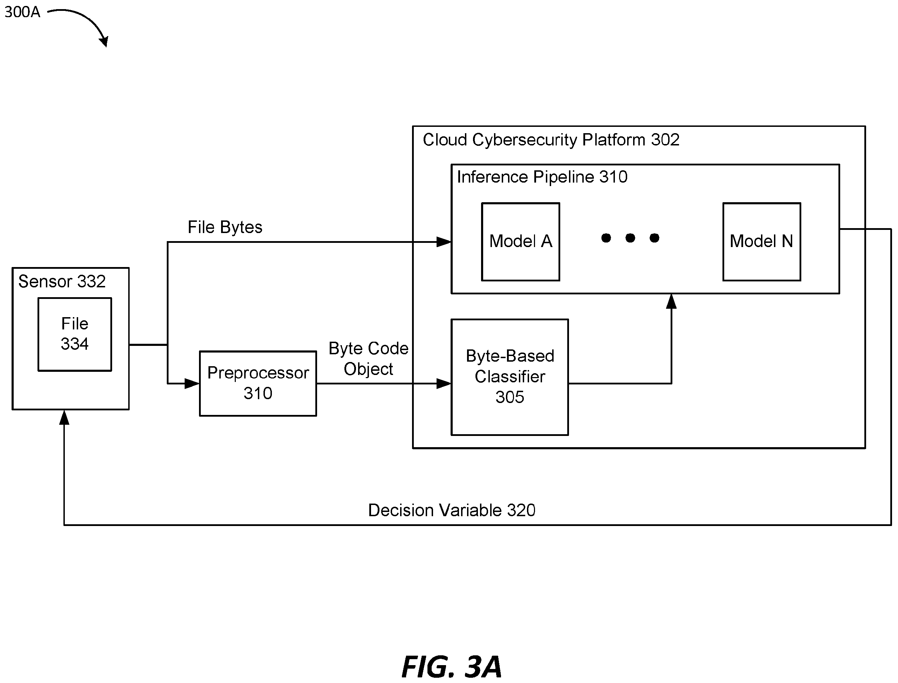

FIG. 3A is a block diagram illustrating an example system 300A for file classification using a cloud deployed byte-based classifier, in accordance with embodiments of the present disclosure. System 300A includes a byte-based classifier 305 deployed to a cloud cybersecurity platform 302. The byte-based classifier 305 may be a trained classification model, such as classification model 105A of FIG. 1 and 205A of FIG. 2A. In some embodiments, a sensor 332 deployed to monitor a device may collect telemetry data from the monitored device. The telemetry data may include files that are queued for execution (e.g., file 334) by the device. The sensor 332 may send the file to the cybersecurity platform 302 for classification (e.g., determining whether the file 334 includes malicious code). A preprocessor 310 may receive the file bytes of the file 334 (e.g., in byte form) and generate a byte code object, as discussed above. Byte form of a file may refer to the bytes of the data rather than the actual data represented by the bytes. In other words, the semantic meaning and any encoding or modality of the bytes is disregarded to allow the bytes themselves to be used as training and inference data for a classifier. Accordingly, a machine learning model (e.g., classification model 105A and 205A) may operate directly on the bits or bytes of a file to identify patterns in the bits or bytes themselves. For example, data may be encoded via various different modalities, in different file types, and in different operating systems. Thus, the same data, such as a character, numeral, etc. may be represented by various different combinations of bits or bytes in the different encodings and modalities. Conventionally, the training or inference of a machine learning model (e.g., a classifier), the modality or encoding of the data is used to provide the input to the machine learning model. The present byte-based classifier 305, however, operates on the bytes themselves to identify and infer patterns within the file. Thus, the byte-based classifier can be applied across various modalities and file types and is therefore not limited by modality of the data. Therefore, the byte form of the data may be, but is not limited to, representation of the data in binary.

In some embodiments, the byte-based classifier 305 may generate an embedding of the byte code object, generate a decision variable (e.g., decision label), or both. Where the byte-based classifier 305 generates an embedding, one or more additional trained AI models of an inference pipeline 310 may take the embedding as input for further classification by the inference pipeline 310. The inference pipeline and the models of the inference pipeline 310 may receive the raw file bytes from the sensor 332 in addition to the embedding from the byte-based classifier 305 to perform additional classifications and increase accuracy of the final output decision variable 320. In some examples, one or more models of the inference pipeline 310 may be trained using labeled outputs of the byte-based classifier 305.

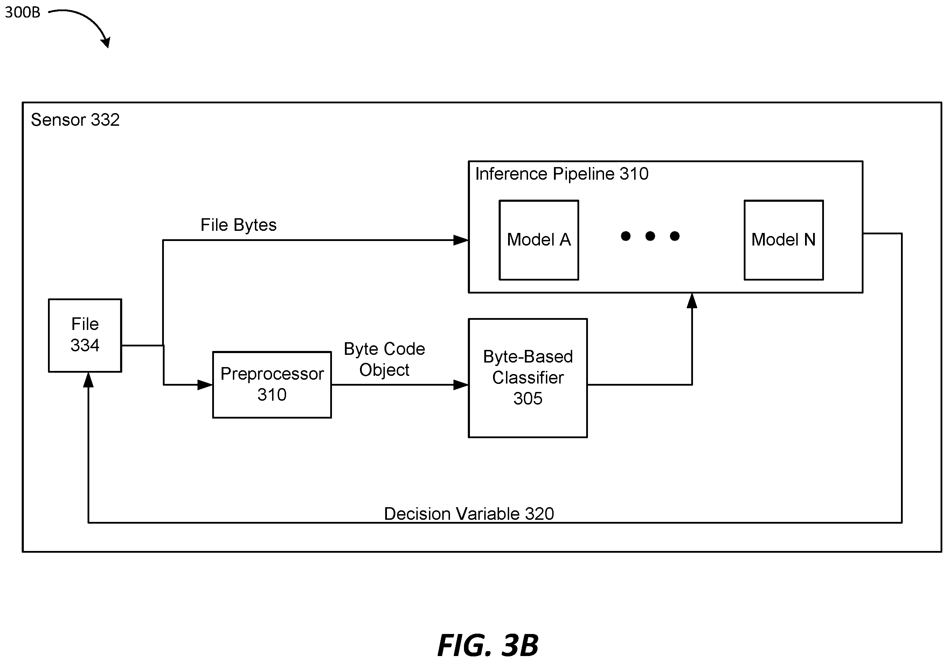

FIG. 3B is a block diagram illustrating an example system 300B for file classification using a byte-based classifier deployed locally to, or within, a sensor, in accordance with some embodiments of the present disclosure. System 300B may operate similar to system 300A except rather than, or in addition to, providing to the bytes of file 334 to the cloud, the preprocessor 310 and byte-based classifier 305 are deployed locally at the sensor 332. In some embodiments, as depicted in FIG. 3B, the inference pipeline 310 including the various additional classifier models may be deployed to sensor 332. Thus, the entire inference pipeline 310 and decision variable 320 generation may be performed locally at the sensor 332. In other embodiments, some or all of the inference pipeline 310 may be deployed to the cloud (e.g., cloud cybersecurity platform 302 of FIG. 3A) or other separate device, software, or platform. Thus, the byte-based classifier 305 may be deployed locally at the sensor 332 to generate the initial encodings or initial decision variables for the byte code objects which may be used locally for classification of the file 334 or provided to the inference pipeline 310 that is external to the sensor 332 for final decision variable 320 determination.

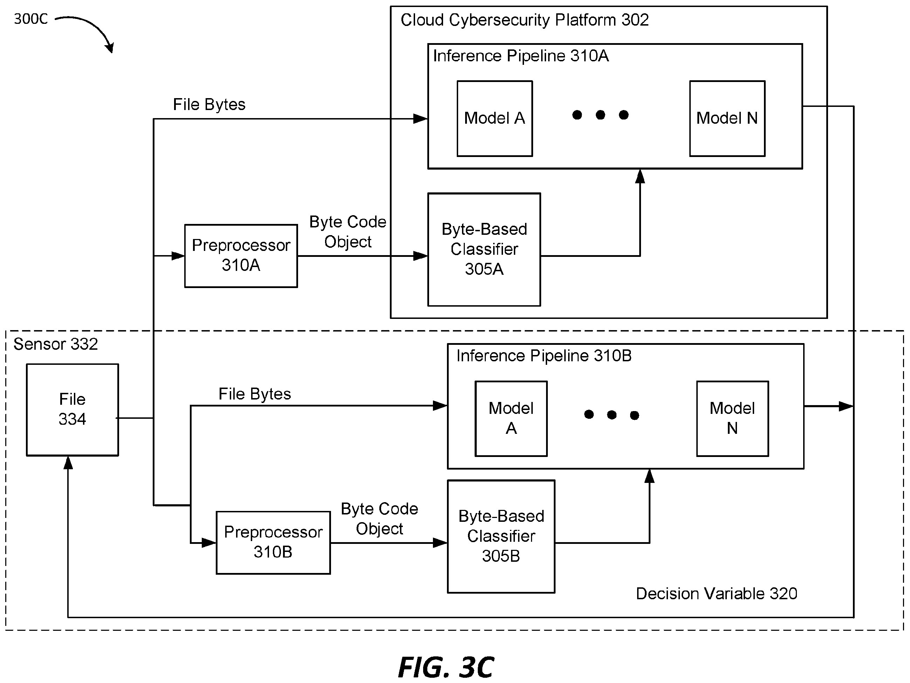

FIG. 3C is a block diagram illustrating an example system 300C for file classification using a byte-based classifier deployed to a local sensor and a cloud cybersecurity platform, in accordance with some embodiments of the present disclosure. System 300C may operate similar to systems 300A and 300B, except that the byte-based classifier may be deployed to both the cloud cybersecurity platform 302 and locally at the sensor 332. Accordingly, the sensor 332 may use either the byte based classifier 305A at cloud cybersecurity platform 302 or the local byte-based classifier 305B, or a combination of byte-based classifier 305A and 305B to determine a decision variable 320 for the file 334. For example, the sensor 332 may determine whether to send the file 334 to either the cloud cybersecurity platform 302 of the local classifier 305B depending on various factors, such as size of the file 334, number of files that need to be classified, traffic associated with the sensor 332 and traffic associated with the cloud cybersecurity platform 302. In some examples, the sensor 332 may determine whether the classification should be performed quicker or with more accuracy. In some embodiments, the sensor 332 determines that accuracy is priority, the sensor 332 may provide the file 334 to the cloud cybersecurity platform 302 to apply the full byte based classifier 305A, whereas for faster determination, the sensor 332 may provide the file 334 locally to the byte-based classifier 305B. In some embodiments, if provided to both byte-based classifiers 305A-B, the sensor 332 may combine the inferences from each inference pipeline 310A-B or select from one of the decision variables generated from each to arrive at a final decision variable 320.

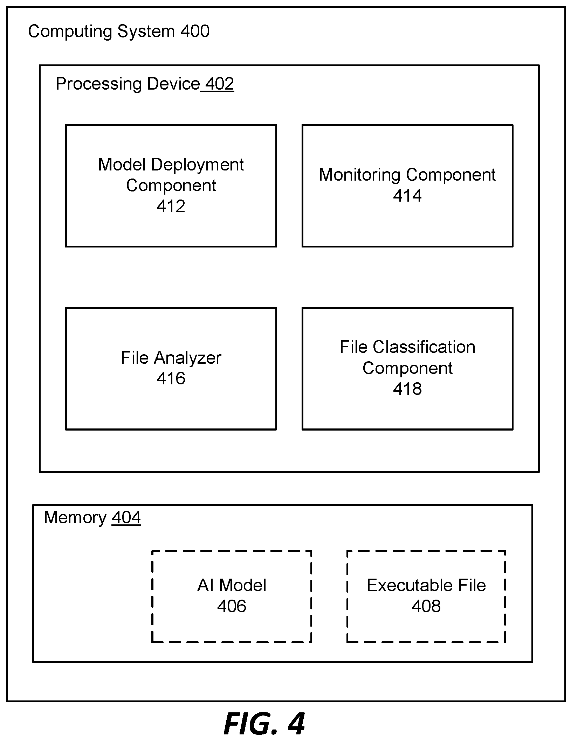

FIG. 4 is a block diagram depicting an example of a computing system 400 for binary file classification using a byte-based classifier, according to some embodiments. While various devices, interfaces, and logic with particular functionality are shown, it should be understood that computing system 400 includes any number of devices and/or components, interfaces, and logic for facilitating the functions described herein. For example, the activities of multiple devices may be combined as a single device and implemented on the same processing device (e.g., processing device 402), as additional devices and/or components with additional functionality are included.

The computing system 400 incudes a processing device 402 (e.g., general purpose processor, a PLD, etc.), which may be composed of one or more processors, and a memory 404 (e.g., synchronous dynamic random-access memory (DRAM), read-only memory (ROM)), which may communicate with each other via a bus (not shown).

The processing device 402 may be provided by one or more general-purpose processing devices such as a microprocessor, central processing unit, or the like. In some embodiments, processing device 402 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. In some embodiments, the processing device 402 may include one or more special-purpose processing devices such as an application specific integrated circuit (ASIC), a field programmable gate array (FPGA), a digital signal processor (DSP), network processor, or the like. The processing device 402 may be configured to execute the operations described herein, in accordance with one or more aspects of the present disclosure, for performing the operations and steps discussed herein.

The memory 404 (e.g., Random Access Memory (RAM), Read-Only Memory (ROM), Non-volatile RAM (NVRAM), Flash Memory, hard disk storage, optical media, etc.) of processing device 302 stores data and/or computer instructions/code for facilitating at least some of the various processes described herein. The memory 404 includes tangible, non-transient volatile memory, or non-volatile memory. The memory 404 stores programming logic (e.g., instructions/code) that, when executed by the processing device 402, controls the operations of the computing system 400. In some embodiments, the processing device 402 and the memory 404 form various processing devices and/or circuits described with respect to computing system 400.

The processing device 402 executes a model deployment component 412, a monitoring component 414, a file analyzer 416, and a file classification component 418. The model deployment component 412 may deploy a AI model to a cybersecurity system or platform. For example, the AI model may be trained and then deployed to execute at the cybersecurity platform. In addition, the AI model may be deployed locally to a sensor of the cybersecurity system (e.g., a sensor or agent deployed to a device or system monitored by the cybersecurity platform). The AI model 406 may be trained using bytes of labeled executable files (e.g., malicious, safe, risky, etc.). The AI model 406 may be trained on file byte data that has been preprocessed into byte code objects of a fixed size. For example, each file used as training data for the AI model may be processed to remove all non-executable portions of the file and then each executable section of the file may be sampled proportionally. Each sample is then combined to generate a fixed sized object used for training. Several epochs of the above processing and training may occur. The monitoring component 414 may monitor a system or device for invocation of executable files 408 (e.g., of a particular file format) and obtain or send the file in byte form to a file analyzer 416. In some embodiments, the monitoring component 414 may be, or may be included in, a sensor deployed to the system or device monitored by the cybersecurity system. The file analyzer 416 may analyze the executable file 408 using the trained byte-based AI model. For example, the file analyzer 416 may first generate a byte code object from the binary file and provide the byte code object to a byte-based classifier. Based on an output of the byte-based classifier, the file classification component 418 may determine a classification or label for the file. The classification may instruct the cybersecurity system to either allow or to prevent the execution of the executable file 408.

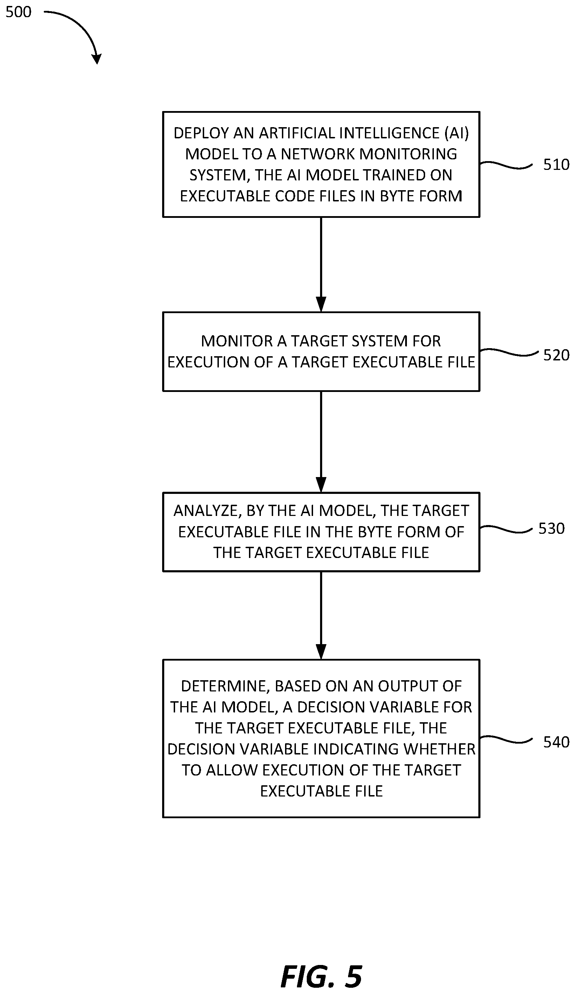

FIG. 5 is a flow diagram of a method 500 of binary file classification using a byte-based classifier, in accordance with some embodiments of the present disclosure. Method 500 may be performed by processing logic that may include hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, at least a portion of method 500 may be performed by cybersecurity cloud platform 102 or sensor 132 of FIG. 1.

With reference to FIG. 5, method 500 illustrates example functions used by various embodiments. Although specific function blocks ("blocks") are disclosed in method 500, such blocks are examples. That is, embodiments are well suited to performing various other blocks or variations of the blocks recited in method 500. It is appreciated that the blocks in method 500 may be performed in an order different than presented, and that not all of the blocks in method 500 may be performed.

With reference to FIG. 5, method 500 begins at block 510, where processing logic deploys a AI model to an endpoint monitoring system. The AI model may be trained on executable code files in byte form. To train the AI model, binary files (e.g., a collection of previously identified and labeled binary files) may be input to the AI model as training data. For example, the binary files may be engineered in a manner to provide a consistent fixed size input, referred to as a byte code object, which include random sampling of each section of the binary files. In some examples, each section is cropped in equal proportion to the total sequence length (e.g., sequence length of executable portions of the file), adding up to the total fixed length. Within each window or section, embodiments may use random cropping at training time such that at each epoch a new random starting point is chosen within each section. The resulting portions may be padded with zeros if the total length summed across sections is less than the total fixed length desired.

At block 520, processing logic monitors a target system for execution of an executable file. In some embodiments, a sensor may be deployed at the target system to collect telemetry data, including files queued for execution. The sensor may identify when an executable file is queued for execution and provide the file to the AI model to analyze the file in byte form.

At block 530, processing logic analyzes, by the AI model, the executable file in the byte form of the executable file. For example, upon identifying execution or invocation of the executable file, processing logic may process the file bytes of the executable file to produce a byte code object of fixed length. For example, as discussed above, the processing logic may filter out all non-executable portions of the file and sample sections of the file to generate the byte code object. The processing logic may input the byte code object to the AI model. The AI model may produce a decision variable indicating whether the file includes malicious code, produce an encoding for further use by other classifiers, or both. The decision variable may indicate a probability of various classifications (e.g., malicious, safe, risky, etc.) while the encoding may include a rich data set (e.g., vector) which may be input into one or more other classification models. For example, the encoding may correspond to an input requirements of other classification models. In some examples, the other classification models may be trained on the encodings from the byte-based classification model (e.g., labeled encodings).

At block 540, processing logic determines, based on an output of the AI model, a classification for the executable file. The processing logic (e.g., the sensor) may thus label the executable file and determine whether to allow or prevent execution of the executable file. Accordingly, the sensor may act as a gatekeeper for executable files of the target system by using a byte-based AI model applied directly to the byte form of the executable files.

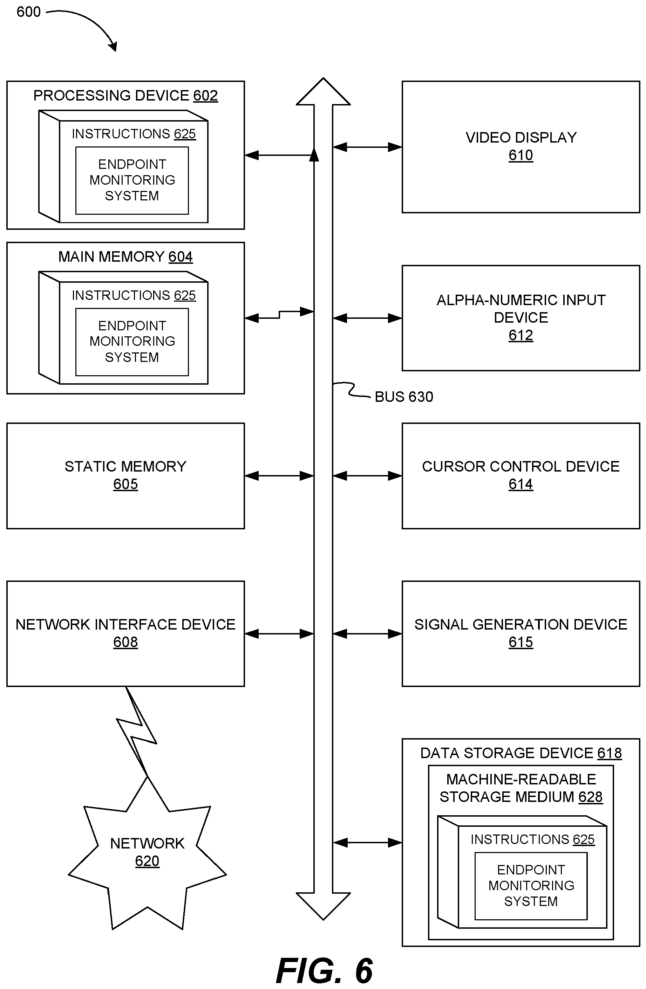

FIG. 6 illustrates a diagrammatic representation of a machine in the example form of a computer system 600 within which a set of instructions, for causing the machine to perform any one or more of the methodologies discussed herein.

In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In some embodiments, computer system 600 may be representative of a server.

The exemplary computer system 600 includes a processing device 602, a main memory 604 (e.g., read-only memory (ROM), flash memory, dynamic random access memory (DRAM), a static memory 606 (e.g., flash memory, static random access memory (SRAM), etc.), and a data storage device 618 which communicate with each other via a bus 630. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

Computer system 600 may further include a network interface device 608 which may communicate with a network 620. Computer system 600 also may include a video display unit 610 (*e.g.,* a liquid crystal display (LCD) or a cathode ray tube (CRT)), an alphanumeric input device 612 (*e.g.,* a keyboard), a cursor control device 614 (*e.g.,* a mouse) and an acoustic signal generation device 616 (*e.g.,* a speaker). In some embodiments, video display unit 610, alphanumeric input device 612, and cursor control device 614 may be combined into a single component or device (*e.g.,* an LCD touch screen).

Processing device 602 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 602 may also be one or more special-purpose processing devices such as an application specific integrated circuit (ASIC), a field programmable gate array (FPGA), a digital signal processor (DSP), network processor, or the like. The processing device 602 is configured to execute endpoint monitoring system, for performing the operations and steps discussed herein.

The data storage device 618 may include a machine-readable storage medium 628, on which is stored one or more sets of endpoint monitoring system instructions 625 (e.g., software) embodying any one or more of the methodologies of functions described herein. The endpoint monitoring system may also reside, completely or at least partially, within the main memory 604 or within the processing device 602 during execution thereof by the computer system 600; the main memory 604 and the processing device 602 also constituting machine-readable storage media. The endpoint monitoring system may further be transmitted or received over a network 620 via the network interface device 608.

The machine-readable storage medium 628 may also be used to store instructions to perform a method for intelligently scheduling containers, as described herein. While the machine-readable storage medium 628 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable medium includes any mechanism for storing information in a form (e.g., software, processing application) readable by a machine (e.g., a computer). The machine-readable medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as "deploying," "monitoring," "analyzing," "determining" or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general-purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a," "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. § 112(f) for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present disclosure to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present disclosure is not to be limited to the details given herein, but may be modified within the scope and equivalents of the appended claims.

## Claims

1. A method comprising:
deploying an artificial intelligence, AI, model to an endpoint protection system, the AI model trained on a plurality of executable code files in byte form;
monitoring, by at least one component of the endpoint protection system, a target system for execution of a target executable file;
analyzing, by a processing device using the AI model, the target executable file in byte form of the target executable file; and
determining, based on an output of the AI model, a decision variable for the target executable file, the decision variable indicating whether to allow execution of the target executable file.

2. The method of claim 1, further comprising:
training the AI model with the plurality of executable code files in byte form to detect malicious code within target files containing executable code.

3. The method of claim 2, wherein training the AI model further comprises:
randomly sampling byte segments of each of the plurality of executable code files in byte form; and
inputting the byte segments of each of the plurality of executable code files as training data for the AI model.

4. The method of any preceding claim, wherein the target executable file comprises a file type associated with an operating system.

5. The method of any preceding claim, further comprising:
generating, by the AI model, an embedding based on the target executable file in the byte form, wherein the embedding comprises a plurality of data points for the target executable file.

6. The method of claim 5, further comprising:
providing the embedding of the AI model as input to another classification model.

7. The method of any preceding claim, further comprising:
compressing the AI model for deployment to a sensor on the endpoint of the endpoint protection system; and
deploying the AI model, as compressed, to the sensor on the endpoint.

8. A system comprising:
a memory; and
a processing device, operatively coupled to the memory, and configured to carry out the method of any preceding claim.

9. A computer program that, when executed by a processing device, causes the processing device to carry out the method of any one of claims 1 to 7.
